(19) **Europäisches Patentamt / European Patent Office / Office européen des brevets**

(11) **EP 1 828 992 B1**

(12) **FASCICULE DE BREVET EUROPEEN**

(45) Date de publication et mention
de la délivrance du brevet:
**02.03.2011 Bulletin 2011/09**

(21) Numéro de dépôt: **05817406.1**

(22) Date de dépôt: **16.12.2005**

(51) Int Cl.:
***G06T 17/05*** (2011.01)

(86) Numéro de dépôt international:
**PCT/EP2005/056852**

(87) Numéro de publication internationale:
**WO 2006/064051 (22.06.2006 Gazette 2006/25)**

(54) **PROCEDE DE TRAITEMENT D'IMAGES METTANT EN OEUVRE LE GEOREFERENCEMENT AUTOMATIQUE D'IMAGES ISSUES D'UN COUPLE D'IMAGES PRIS DANS LE MEME PLAN FOCAL**

VERFAHREN ZUM VERARBEITEN VON BILDERN UNTER VERWENDUNG AUTOMATISCHER GEOREFERENZIERUNG VON BILDERN, DIE AUS ZWEI IN DERSELBEN FOKALEBENE ERFASSTEN BILDERN ABGELEITET WERDEN

METHOD FOR PROCESSING IMAGES USING AUTOMATIC GEOREFERENCING OF IMAGES DERIVED FROM A PAIR OF IMAGES CAPTURED IN THE SAME FOCAL PLANE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **16.12.2004 FR 0413420**

(43) Date de publication de la demande:
**05.09.2007 Bulletin 2007/36**

(73) Titulaire: **CENTRE NATIONAL D'ETUDES SPATIALES**
**F-75001 Paris (FR)**

(72) Inventeurs:
• **VADON, Hélène**
**F-31500 TOULOUSE (FR)**
• **LATRY, Christophe**
**F-31400 TOULOUSE (FR)**

(74) Mandataire: **Callon de Lamarck, Jean-Robert et al**
**Cabinet Regimbeau**
**20 rue de Chazelles**
**75847 Paris cedex 17 (FR)**

(56) Documents cités:
**US-B1- 6 757 445**

• **EHLERS M., WELCH R.: "Stereocorrelation of Landsat TM Images" PHOTOGRAMMETRIC ENGINEERING AND REMOTE SENSING, vol. 53, no. 9, septembre 1987 (1987-09), pages 1231-1237, XP009051483**
• **IIKURA Y.: "Automation of precise ortho-rectification of Landsat TM images" SICE 2002. PROCEEDINGS OF THE 41ST SICE ANNUAL CONFERENCE, vol. 3, 5 août 2002 (2002-08-05), pages 1898-1900, XP002338445**

**EP 1 828 992 B1**

**Description**

DOMAINE DE L'INVENTION

Le domaine de l'invention concerne les images de télédétection et notamment les images aéroportées et satellitaires. Plus précisément, l'invention concerne un procédé pour géoréférencer automatiquement les images de télédétection c'est-à-dire que l'invention concerne un procédé permettant d'associer automatiquement aux éléments des images de télédétection une position définie par des coordonnées géographiques ou cartographiques.

PRESENTATION DE L'ART ANTERIEUR

Une image de télédétection fournit une représentation bidimensionnelle, échantillonnée spatialement, d'une région sur le terrain appelée scène, représentation dans laquelle chaque valeur numérique de télédétection est représentative d'une petite surface sur le terrain, centrée sur chacun des points de la grille d'échantillonnage.

La plupart des applications de l'imagerie de télédétection nécessitent un processus, le géoréférencement, qui établit une relation géométrique entre les coordonnées dans la géométrie image, définies par un numéro de ligne et de colonne, et les coordonnées géographiques ou cartographiques sur le terrain.

La correspondance entre les coordonnées image, ligne et colonne, et les coordonnées terrain, qui sont exprimées en latitude et longitude dans le repère géographique et en mètres dans un système cartographique de projection, est définie par le calcul de l'intersection de la direction de visée des détecteurs composant le capteur du système imageur qui acquiert les images, à l'instant d'acquisition, avec un modèle de la Terre.

Ce calcul nécessite alors deux catégories d'informations.

La première catégorie d'informations concerne la connaissance de la géométrie de la prise de vue. Elle est définie par les caractéristiques du capteur (caractéristiques instrumentales), la position, la vitesse et l'attitude du porteur, ces derniers consistant en des angles de roulis, tangage et lacet. La géométrie de prise de vue est connue de l'utilisateur à traver-s un modèle géométrique, élaboré grâce aux étalonnages géométriques, livré en général avec les images. Ce modèle a une précision toujours limitée, par défaut d'étalonnage du plan focal, et à cause de l'échantillonnage et du filtrage des données d'attitude.

La seconde catégorie d'informations concerne la connaissance d'un modèle d'attitude de la Terre. Celle-ci peut être approximée par un ellipsoïde ou par un modèle d'altitude de la région où se trouve la scène, et plus particulièrement un modèle numérique de terrain (MNT). Ce dernier est défini comme une représentation numérique de l'altitude qui intègre les paramètres de pente et de relief de la région géographique étudiée.

Disposer de ces informations d'une manière exacte est peu courant en pratique. Les images brutes obtenues par un capteur ne peuvent pas être directement géoréférencées de façon précise car elles comportent des déformations globales ou locales qui ne sont pas parfaitement modélisées. On peut citer, par exemple, les déformations dues à la non connaissance parfaite de l'optique de prise de vue, aux mouvements non connus du système imageur et aux imprécisions de la connaissance du relief sur la zone observée.

Quand on souhaite corrigeur géométriquement et géoréférencer une image de télédétection, il est alors nécessaire de recourir à une information supplémentaire qui peut être, principalement, soit la connaissance d'un certain nombre de points appelés points d'appui, soit la connaissance d'autres images de télédétection déjà géoréférencées.

La première technique connue pour corriger et géoréférencer une image de télédétection repose ainsi sur la recherche de points d'appui, c'est-à-dire des points de repère connus en coordonnées et identifiables à la fois dans l'image et sur le terrain, cf. Ehlers M., welch R. : "Stereocorrelation of Landsat TM images", Photogrammetric Engineering and Remote Sensing, Vol. 53, No. 9, 1987, P.1231- 1237. Landsat TM Avec éventuellement une connaissance du relief local (MNT), ils servent à affiner le modèle géométrique de prise de vue de l'image de télédétection permettant ensuite sa projection sur le terrain et son géoréférencement.

La projection sur le terrain est d'autant plus précise que le nombre de points d'appui est important et qu'ils sont bien répartis sur l'image.

Le choix des points d'appuis se focalise sur des points remarquables et précis, comme des intersections de routes, des bâtiments, des angles de champs, etc.

Dans la majorité des cas, le choix s'effectue sur une carte. Lorsque l'on ne dispose pas de cartes, ou que sa précision est insuffisante, on a recours à la prise de points d'appui par des méthodes géodésiques classiques ou par GPS.

La prise de points d'appui est ainsi partiellement ou totalement manuelle. C'est une opération longue et coûteuse qui demande des opérateurs très expérimentés et une grande attention pour ne pas introduire d'erreurs dans le géoréférencement.

La seconde technique connue pour corriger et géoréférencer une image de télédétection repose, pour éviter le processus manuel, sur l'utilisation d'un certain nombre d'imagettes, qui sont des extraits d'images, déjà géoréférrencées.

Dans ce cas, la recherche de points d'appui est remplacée par la recherche de points homologues entre l'image à géoréférencer et l'imagette déjà géoréférencée, ce qui à l'intérêt de pouvoir automatiser la procédure de géoréférencement.

Or cette technique suppose d'avoir à disposition une base de données d'images ou d'imagettes qui recouvre une grande partie de la surface de la Terre et que cette base soit disponible pour la plupart des utilisateurs de traitement d'images. A l'heure actuelle, une telle base de données, si elle existe, n'est pas librement accessible.

De plus, la constitution d'une telle base est une opération complexe et extrêmement coûteuse.

D'autre part, si l'on utilise une telle base de référence, les fortes variations saisonnières des images engendrent des décorrélations temporelles qui compliquent la recherche de points homologues entre l'image à géoréférencer et l'image de référence.

Un but de la présente invention est de proposer un procédé de traitement d'images mettant en oeuvre le géoréférencement d'images se distinguant des techniques précédentes et de leurs inconvénients, notamment en ce qu'il permet un géoréférencement d'images entièrement automatique ne s'appuyant pas sur une base de données d'images ou d'imagettes déjà géoréférencées.

Un autre but de l'invention est de fournir un procédé de géoréférencement d'images entièrement automatique à partir d'un couple d'images acquis soit par des capteurs CCD (charge couple device), soit par des matrices TDI (time delay intégration), de résolutions et de bandes spectrales éventuellement différentes, appartenant au même plan focal et donc disposés dans une configuration de faible base stéréoscopique.

Le coefficient stéréoscopique b/h, pour chaque point du terrain, est le rapport entre la distance b entre les deux points de l'espace qui ont imagé ce point du terrain, et la distance h entre ces points de l'espace et le point de la scène observée.

Une configuration de faible base stéréoscopique est définie comme un rapport stéréoscopique b/h typiquement inférieur à 0,3.

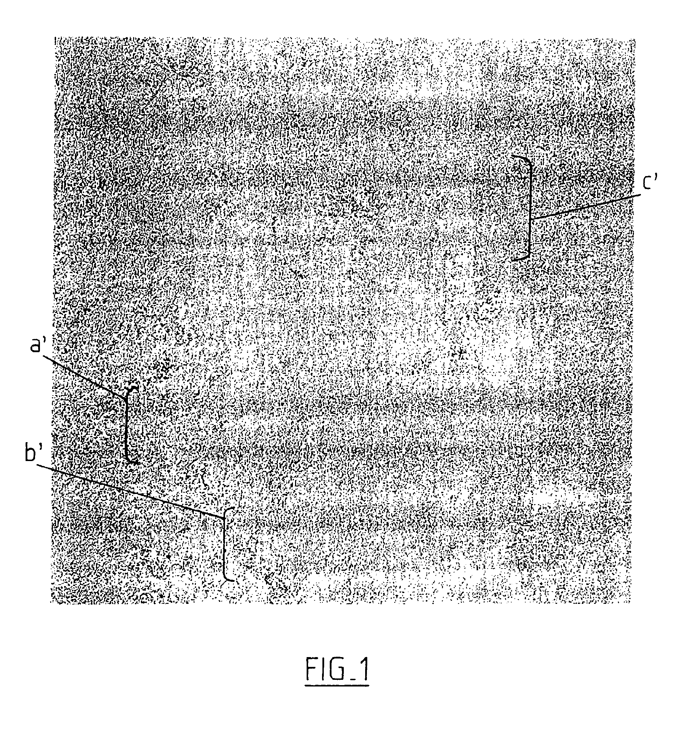

Un autre but de la présente invention est de s'affranchir pour le géoréférencement des artefacts de prise de vue caractéristiques de la stéréoscopie à faible b/h, à savoir les résidus provenant des vibrations non modélisées d'attitude. Sur la figure 1, des résidus d'attitude sont visibles et se caractérisent schématiquement par des vagues le long des colonnes, faisant apparaître alternativement des ensembles de lignes claires et sombres tels que les ensembles a', b', et c'. Ces artefacts d'attitude seraient, s'ils n'étaient pas éliminés, interprétés comme des variations alternativement positives et négatives de la valeur d'altitude calculée autour de la valeur- vraie.

Il est également désirable d'offrir une technique de géoréférencement d'images de télédétection qui permet, d'une part, d'utiliser des données disponibles pour tout utilisateur et, d'autre part, de réaliser une économie en termes de coûts et de temps tout en préservant une qualité de précision de géoréférencement.

La précision atteinte par le procédé est, par ailleurs, meilleure que la précision de localisation de la plupart des systèmes imageur opérationnelles actuellement.

RESUME DE L'INVENTION

Ces buts, ainsi que d'autres qui apparaîtrons par la suite sont atteints par un procédé de traitement d'images dans lequel on met en oeuvre le géoréférencement d'au moins une image numérique à l'aide au moins d'un modèle de prise de vue de ladite image numérique et d'une forme numérique de relief de référence, ladite image numérique étant issue d'un couple d'images numériques acquises dans le même plan focal comprenant au moins les étapes suivantes :

- produire une forme numérique de relief dite forme numérique de relief intermédiaire à partir dudit couple d'images numériques;

- traiter ladite forme numérique de relief intermédiaire et la dite forme numérique de référence en calculant les décalages de position entre les points de ladite forme numérique de relief de référence et leurs homologues dans la forme numérique de relief intermédiaire en vue d'affiner ledit modèle de prise de vue de ladite image numérique à géoréférencer ;

- Générer une forme numérique de relief dite forme numérique de relief finale à partir dudit couple d'images numériques et dudit modèle de prise de vue affiné ;

- Projeter ladite forme numérique de relief finale et ladite image numérique sur le terrain, dans un système géographique ou cartographique, en vue de leur géoréférencement.

Les deux images du couple sont acquises dans une configuration de faible base stéréoscopique par des capteurs disposés dans un même plan focal, et, avantageusement, les formes numériques de relief sont des modèles numériques de terrain.

BREVE DESCRIPTION DES FIGURES

L'invention sera mieux comprise et d'autres avantages apparaîtront à la lecture de la description qui va suivre donnée à titre d'exemple non limitatif et grâce aux dessins annexés parmi lesquels :

- La figure 1 illustre des résidus d'attitude classiquement présents dans un modèle de type MNT en faible base stéréoscopique ;

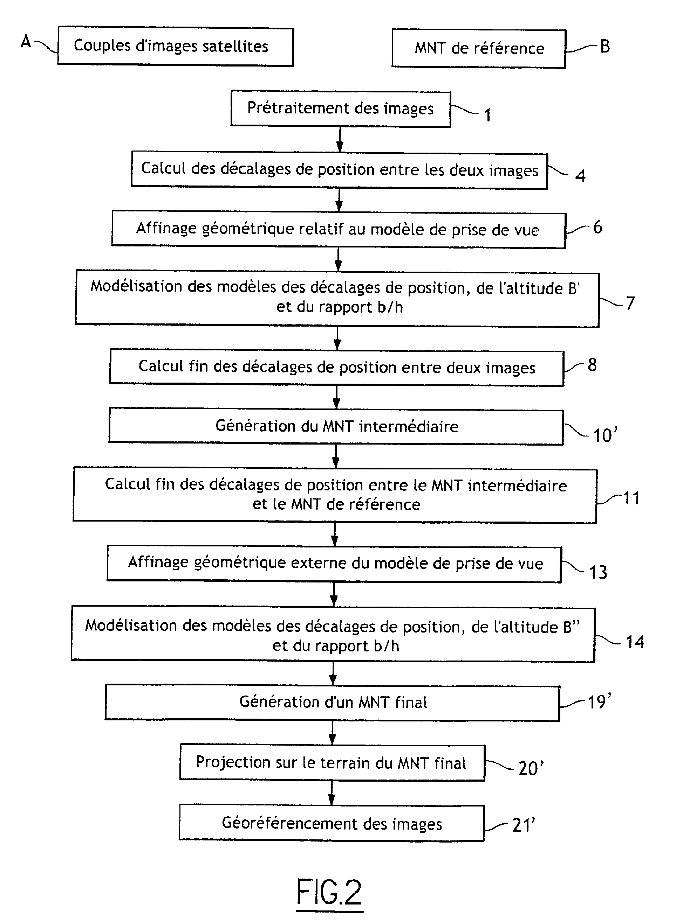

- La figure 2 représente le schéma synoptique d'ensemble du procédé selon l'invention;

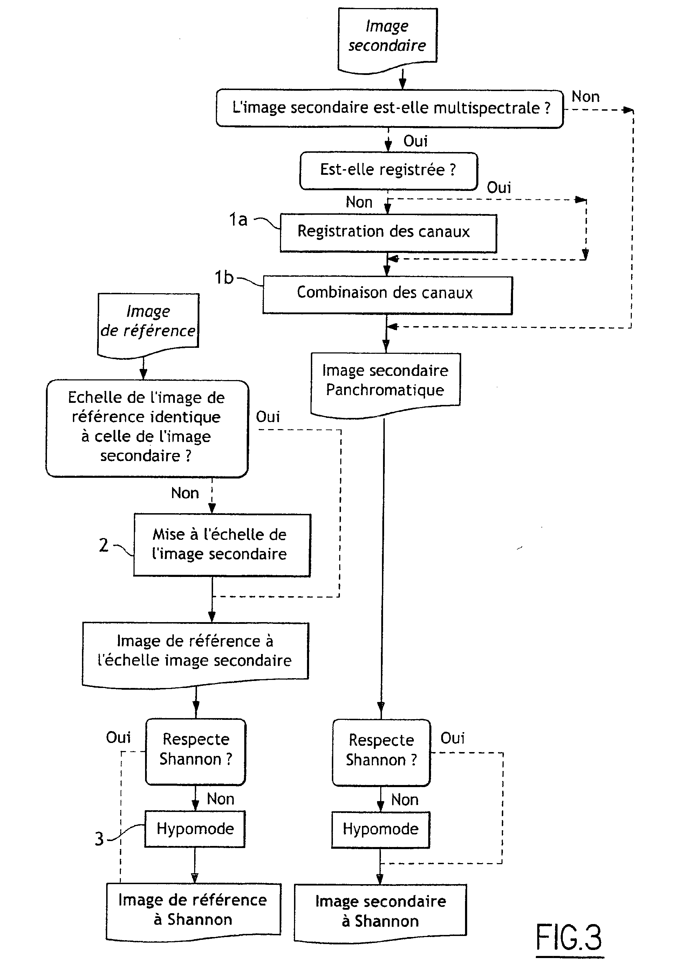

- La figure 3 représente le schéma des séquences de prétraitement du couple d'images acquis par les capteurs du système imageur selon l'invention ;

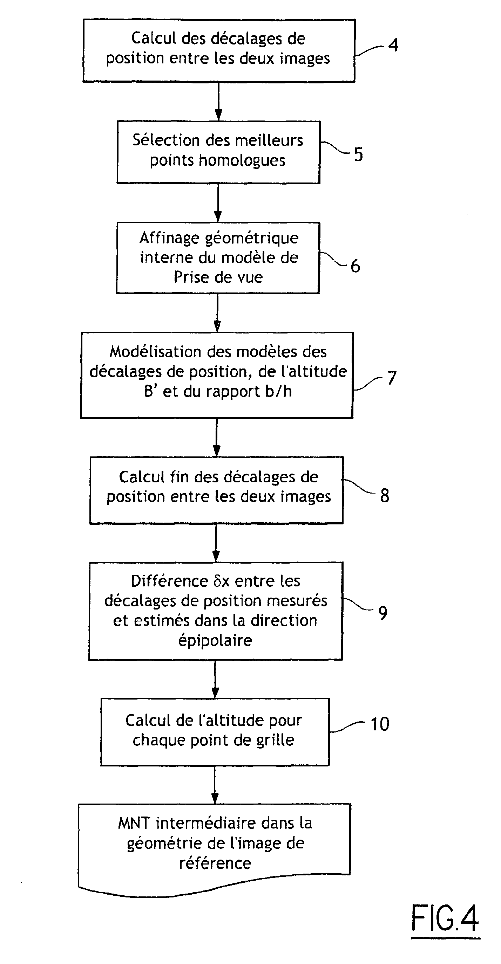

- La figure 4 représente le schéma synoptique des étapes générant un modèle numérique de terrain (MNT) intermédiaire selon l'invention ;
- Les figures 5 (5a, 5b, 5c) illustrent respectivement trois modèles numériques de terrain : un MNT intermédiaire, un MNT de référence et la différence entre les deux MNT précédents ;
- La figure 6 représente le schéma synoptique des étapes générant le modèle numérique de terrain (MNT) final et le géoréférencement de l'image selon l'invention ;
- Les figures 7a et 7b représentent un extrait d'image SPOT 5 géoréférencé par la localisation d'origine du satellite SPOT 5, superposé à une carte par transparence, et le même extrait géoréférencé par le procédé selon l'invention.

DESCRIPTION DETAILLEE DE L'INVENTION

Tel qu'illustré à la figure (2), le procédé nécessite d'acquérir un couple d'images A. Deux barrettes CCD (ou deux ensembles de barrettes adjacentes CCD) ou deux matrices TDI. (ou deux ensembles de matrices adjacentes TDI) situées dans le même plan focal permettent d'acquérir les deux images satellites de la scène observée à une certaine distance des capteurs. Le système d'acquisition du couple sera décrit précisément plus loin.

Selon la nature et les caractéristiques des images acquises par les capteurs, une étape 1 de prétraitement est prévue avant tout traitement des images. Elle sera détaillée, plus loin, en référence à la figure (3).

Le procédé repose, plus précisément, sur l'acquisition du couple d'images A dans une configuration de faible base stéréoscopique et sur la disponibilité d'un modèle numérique de terrain de référence B de la scène observée. Le procédé fonctionne même avec des coefficients stéréoscopiques b/h très faibles, mais la précision altimétrique obtenue est inversement proportionnelle à la valeur du b/h. Plus exactement, la précision en attitude $\Delta h$ sera égale à $\Delta x / (b/h)$, ou $\Delta x$ est la précision attendue lors le calcul de décalage par corrélation, en mètres.

Les deux images du couple A ne sont pas superposables en l'état. En effet, l'utilisation des modèles géométriques associés à l'image ne permet pas d'obtenir avec une parfaite précision les coordonnées d'un point dans la deuxième image du couple à partir de ses coordonnées dans la première image. Il y a un décalage entre la position estimée par modèle et la position vraie. Pour déterminer ce décalage de position, on effectue une mise en correspondance des pixels du couple d'images A par une technique de corrélation. Une première image sert d'image de référence et on cherche à retrouver pour chaque pixel de cette image son homologue dans l'image secondaire. Il est possible, alors, de reconstruire les données en trois dimensions des points de la scène observée à partir du modèle géométrique de prise de vue.

Pour obtenir le géoréférencement automatique d'une image satellite du couple A à l'étape 21' le procédé utilise cette possibilité.

Il propose, dans un premier temps, la génération d'un modèle numérique de relief des points de la scène et plus particulièrement la génération d'un MNT intermédiaire de faible base stéréoscopique (étape 10') à partir du couple d'images A.

Cette opération 10' de génération de modèle de type MNT nécessite plusieurs opérations préalables consécutives dont les principales sont les suivantes:

- une mise en correspondance des deux images du couple A et plus précisément un premier calcul de décalages de position (étape 4) entre les deux images pour un premier sous ensemble de points de l'image de référence, généralement peu dense,
- un affinage du modèle de prise de vue relatif du couple d'images (étape 6). Il correspond à une opération d'orientation interne de l'image secondaire par rapport à l'image de référence. Ces définitions associées aux images du couple sont détaillées plus loin en référence à la figure (3).
- une modélisation du décalage de position, de l'altitude et de la base stéréoscopique b/h pour un second sous ensemble de points, généralement dense, de l'image de référence à l'étape 7 à l'aide du modèle de prise de vue affiné.
- une seconde mise en correspondance des deux images du couple A et plus précisément un calcul fin de décalages de position (étape 8) entre les deux images pour ce second sous ensemble de l'image de référence.

- une reconstruction intermédiaire du relief de la scène observée par un calcul d'altitude pour ce second sous ensemble de l'image de référence (étape 10), altitudes déterminées en s'appuyant sur les décalages de position mesurés à l'étape 4 et modélisés à l'étape 9.

Le procédé de géoréférencement automatique d'une image du couple A propose, dans un second temps, la génération d'un modèle numérique de terrain final (étape 19') superposable par construction au modèle numérique de terrain de référence.

Dans ce but, on réalise principalement les étapes suivantes:

- un affinage géométrique du modèles de prise de vue externe à l'étape 13 des images du couple A, réalisé en s'appuyant: sur la recherche de points homologue entre le modèle numérique de terrain intermédiaire, et le modèle numérique de terrain de référence B' dans la géométrie de l'image de référence.
- une modélisation à l'étape 14 des décalages, des attitudes et des bases stéréoscopiques b/h à l'aide du modèles de prise de vue nouvellement affiné.
- une reconstruction finale du relief de la scène observée par un calcul d'altitudes pour un second sous ensemble de l'image de référence (étape 19), altitudes déterminées en s'appuyant sur les décalages de position mesurés à l'étape 8 et modélisés à l'étape 14.

Le modèle numérique de terrain final est ensuite projeté dans un système cartographique ou géographique à l'étape 20'. Le géoréférencement des images du couple A à l'étape 21' est alors réalisé, classiquement, en connaissant deux informations précises : le modèle de prise de vue final des images du couple A et le modèle numérique de terrain final en coordonnées terrain, cartographiques ou géographiques.

Les figures (3), (4) et (6) suivantes donnent des précisions quant aux différentes étapes de traitement du procédé selon l'invention. Ces différentes séquences vont maintenant être présentées.

1- Données d'entrée

Pour mettre en oeuvre le procédé, les données d'entrée sont les suivantes :

- un couple d'images A, à savoir une première image et une seconde image, acquises dans le même plan focal et donc avec une configuration de faible base stéréoscopique b/h, typiquement de quelques centièmes de pixel.

Dans un exemple illustratif du procédé de géoréférencement, on définit une première image du couple A comme une image panchromatique de haute résolution et la seconde image du couple A comme une image multispectrale de résolution plus faible. Dans cet exemple, la bande spectrale panchromatique est supposée proche spectralement d'une combinaison de bandes multispectrales.

De préférence, on choisit l'image de plus haute résolution comme image de référence et l'image de plus faible résolution comme image secondaire.

La nature des images ainsi que leurs caractéristiques peuvent faire l'objet de nombreuses variantes de réalisation. Elles ne sont pas limitées aux illustrations choisies dans la description du mode préféré de réalisation du procédé. En particulier, on peut envisager le géoréférencement d'images hyperspectrales.

- un modèle numérique de terrain de référence B. Le procédé n'impose pas de contrainte forte concernant sa qualité altimétrique ni sa résolution, mais sa localisation doit être la meilleure possible car elle sera utilisée comme localisation de référence. D'autre part, meilleure sera sa résolution, meilleure sera la modélisation des résidus d'attitude que l'on arrivera à supprimer.

Le modèle numérique de terrain de référence B est projeté dans la géométrie de l'image de référence par des techniques maîtrisées par l'homme de l'art. La projection dans le plan focal de ce MNT, avec les modèles géométriques d'origine, s'appelle B'. Celle après l'affinage des paramètres géométriques relatifs s'appelle B".

De préférence, le MNT de référence B est le NNT STRM (« Shuttle Radar Topography Mission »), disponible sur le site http://seamless.usgs.gov/ pour tout utilisateur, aux latitudes compris entre -60° et + 60°.

Pour simplifier la description du procédé de géoréférencement, on ne considèrera pas dans la suite le traitement de la mer et des nuages sur les images du couple A. Une variante de réalisation du procédé consisterait à traiter ces caractéristiques en fabriquant des masques image et en les utilisant pour invalider localement les résultats des calculs de décalages de position,

2- Prétraitement des images du couple A

Tel qu'illustré par la figure (3), le prétraitement à l'étape 1 du couple d'images A acquis en faible base stéréoscopique est effectué en réalisant les étapes suivantes :

- registration, c'est-à-dire mise dans une même géométrie, des canaux de l'image multispectrale (étape 1a), si cette registration est nécessaire, puis combinaison de ces canaux (étape 1b) de manière à synthétiser une bande spectrale proche du panchromatique;
- mise à l'échelle à l'étape 2 selon l'image basse résolution de l'image haute résolution ;
- traitement hypomode à l'étape 3 du couple d'images A.

Selon la figure (3), si l'image secondaire multispectrale n'est pas registrée, la registration (étape 1a) doit être réalisée préalablement à la combinaison des canaux spectraux (étape 1b): On transforme ainsi l'image secondaire représentant des réflectances en image de luminance.

Si l'image secondaire multispectrale est registrée, elle aura comme premier traitement la combinaison de ses canaux spectraux (étape 1b).

Dans un exemple purement illustratif, si l'image de référence panchromatique couvre spectralement l'équivalent de deux canaux multispectraux, la combinaison des canaux à l'étape 1b de l'image secondaire est effectuée en divisant la radiométrie des 2 canaux spectraux par leur coefficient d'étalonnage absolu et en additionnant les deux canaux obtenus. On génère ainsi une image secondaire panchromatique.

Si les deux images n'ont pas la même résolution, on réalise l'étape 2 de mise à l'échelle de l'image haute résolution selon l'image de plus basse résolution.

On réalise la mise à l'échelle de l'image de référence haute résolution selon l'image secondaire en la rééchantillonnant par convolution et la sous-échantillonnant.

Le filtrage de l'image de référence par convolution et sous échantillonnage se réalise à l'aide d'un filtre adapté. De préférence, le filtres sera représentatif du rapport entre les fonctions de transfert de modulation (FTM) basse résolution et haute résolution. La taille de la fenêtre de convolution déprendra du rapport des fonctions de transfert des deux images. Cette opération peut être réalisée avec des rapports de résolution quelconques, même non entiers.

Il est bien connu de l'art antérieur que la résolution spatiale est directement liée à la fonction de transfert de modulation. L'opération de filtrage permet bien la dégradation en résolution de l'image de référence haute résolution du couple d'images A.

Le critère de Shannon stipule que toute image doit être échantillonnée à deux fois la fréquence spatiale maximum accessible.

Si l'une des deux images du couple A ne respecte pas le critère de Shannon alors un traitement anti-repliement lui est appliqué. Avantageusement, le traitement hypomode (étape 3) est utilisé, mais d'autres traitements sont envisageables. Les pixels de l'image sont sommés 2 par 2, en ligne et en colonne, sans changer l'échantillonnage. Un nouveau réseau d'échantillonnage est ainsi réalisé. Ce faisant, on réduit la résolution d'un facteur 2 en ligne et en colonne mais l'image traitée est maintenant correctement échantillonnée.

La formule utilisée pour le calcul est la suivante :

$$H_{(i,j)} = 1/4 * \sum_{\substack{k=0,1 \\ l=0,1}} IM_{(i+k,j+l)}$$

H définit la radiométrie de l'image hypomodisée au pixel de coordonnées (i,j), IM celle dans l'image avant le traitement avec sommation des pixels de coordonnées (i,j) et (k,l).

Ce traitement modifie les conditions géométriques de l'image en la décalant de 0.5 pixels en ligne et en colonne. On joint alors à cette opération une translation de -0.5 pixels en ligne et en colonne pour revenir exactement aux conditions géométriques d'origine.

La fin de l'étape 1 de prétraitement d'images est caractérisée par l'obtention d'un couple d'images à la même échelle, vérifiant le critère de Shannon.

On effectue alors le traitement proprement dit des images du couple A. Le procédé générant les images géoréférencées comprend les différentes étapes précédemment évoquées et qui vont maintenant être détaillées en référence aux figures (4) et (6).

3-Affinage géométrique relatif du_modèle de prise de vue

Tel qu'illustré à la figure (4), on cherche dans un premier temps à effectuer un affinage géométrique relatif du modèle de prise de vue et plus précisément l'orientation interne de l'image secondaire par rapport à l'image de référence.

Rappelons qu'il est nécessaire d'affiner le modèle de prise de vue car la connaissance de paramètres comme la datation des lignes, la position et la vitesse du satellite (éphémérides), l'orientation du satellite (attitude) et les directions de visée des détecteurs par rapport au satellite (caractérisation du plan focal) n'est pas parfaite, et ne permet donc pas de déterminer exactement la correspondance des coordonnées des pixels des images du couple A à des coordonnées sur le terrain.

Cet affinage permet d'identifier les différences relatives entre les modèles de prise de vue et les évolutions temporelles de l'attitude du porter.

Avantageusement, on considère la datation des lignes et les éphémérides comme corrects. En effet, la précision sur ces paramètres est meilleure que le mètre.

L'affinage porte sur les paramètres d'attitude qui influent sur l'orientation relative des images, c'est-à-dire les dérives temporelles en attitude et l'orientation relative interne des capteurs. Dans le cas où l'on connaît parfaitement l'orientation interne des capteurs, son but devient de réduire ou d'éliminer les dérives pour chacun des 3 angles, roulis, tangage et lacet et d'ajuster la distance focale de l'image secondaire par rapport à l'image de référence.

Dans une variante de réalisation du procédé, concernant un système dont les éphémérides ou la datation des lignes seraient peu précises, il faudrait également les affiner par des techniques connues de l'homme de l'art.

L'affinage du modèle géométrique de prise de vue est effectué grâce aux étapes suivantes :

- calcul des décalages de position entre les deux images satellites du couple A à l'étape 4 ;
- sélection des meilleurs points homologues des deux images du couple A à l'étape 5 ;
- affinage géométrique proprement dit du modèle de prise vue interne de l'image- secondaire à l'étape 6 à l'aide des points homologues sélectionnés à l'étape 5.

L'étape 4 de calcul des décalages de position entre les deux images du couple nécessite d'identifier les pixels qui seront considérés comme homologues dans les deux images.

Cette mise en correspondance entre pixels des deux images n'est possible que grâce à la reconnaissance d'une similarité radiométrique dans un voisinage de ces pixels. En considérant une forme rectangulaire ou carrée, on caractérise un voisinage centré sur un pixel (i,j) par une vignette.

Mesurer la ressemblance entre un pixel de l'image de référence et un pixel de l'image secondaire revient donc à évaluer la ressemblance de deux vignettes.

De préférence, une technique de corrélation est choisie pour déterminer le degré de ressemblance entre les vignettes, à savoir les vignettes de l'image de référence et les vignettes de l'image secondaire.

Les mesures de ressemblance s'apparentent, plus précisément, à des calculs de covariance. Le coefficient de corrélation choisi est défini comme la covariance normalisée entre deux vignettes et sa formule est la suivante :

$$Coef = \frac{E(rad1(i,j).rad2(l,p))}{\sigma_1.\sigma_2}$$

L'expression rad(i,j) définit la radiométrie du pixel 1 de coordonnées (ligne,colonne) égales à (i,j) dans la vignette de référence ; rad(l,p) définit; la radiométrie du pixel de coordonnées (ligne,colonne) égales à (l,p) dans la vignette secondaire et le dénominateur s'exprime comme le produit des écarts type des vignettes 1. et 2. E représente l'espérance mathématique.

Avantageusement, les calculs de coefficients de corrélation sont réalisés sur une grille de corrélation lâche de points représentant un sous-ensemble régulier de pixels de l'image de référence. Le pas de la grille de corrélation est choisi de manière à être significativement supérieur au nombre d'inconnues à déterminer lors de l'affinage. De préférence, on prendra un semis régulier de dimension environ 30 *30.

La technique de corrélation automatique qui va permettre de déterminer les points homologues entre les deux images s'effectue tout d'abord en introduisant des vignettes appelées vignettes de corrélation. Ces vignettes sont des sous images des images de référence et secondaire centrées sur les pixels homologues estimés. Ces pixels homologues sont estimés grâce à la connaissance du modèle de prise de vue initial et du modèle numérique de terrain de référence B.

Le principe du calcul de décalage par corrélation est présenté pour un point particulier de la grille de corrélation lâche de l'image de référence mais il est réalisé pour chacun des points de la grille.

On se donne une vignette centrée sur un point de la grille de l'image de référence et on recherche son homologue radiométrique sur l'image secondaire. Cette opération est réalisée en déplaçant la vignette de corrélation de l'image secondaire dans une fenêtre plus grande nommée aire de recherche. Toutes les deux sont centrées, initialement, sur le pixel homologue estimé du point de la grille de l'image de référence et on calcule, à chaque déplacement de la vignette de corrélation dans l'aire de recherche, le coefficient de corrélation.

Sur la base des valeurs du coefficient de corrélation calculées, le pixel de l'image secondaire qui représente le centre de la vignette de corrélation sur l'aire de recherche produisant le coefficient de corrélation le plus élevé est identifié comme le point homologue au point de la grille de corrélation de l'image de référence.

A partir de cette position, et avec différentes stratégies possibles, telle la dichotomie par pas de $1/2^n$, ou la recherche suivant la directions du gradient maximum des taux de corrélation, on effectue le même calcul au niveau sous pixellaire en rééchantillonnant vocalement l'image secondaire à des positions fractionnaires en ligne et en colonne, jusqu'à obtenir la position fractionnaire qui maximise le coefficient de corrélation.

Avantageusement, on appliquera un filtre sinus cardinal, de taille 15*15 points, apodisé par une gaussienne normalisée, sur la vignette de corrélation de l'image secondaire. Il faut en effet utiliser un filtre interpolateur le plus proche possible du filtre idéal théorique : le filtre sinus cardinal, qui est infini. D'autres filtres sont utilisables, tels les filtres basés sur les fonctions spline. L'image secondaire est rééchantillonnée autour de la position de l'homologue identifié lors de la sous étape précédente, à + ou - 0.5 pixels en ligne et en colonne. De manière itérative avec des décalages chaque fois plus petits ($1/2^n$) autour de la meilleure position, le coefficient de corrélation est recalculé pour chacune des positions et le maximum de corrélation est repéré.

La taille des vignettes est l'objet d'un compromis. Une grande vignette augmente la signification statistique du coefficient de corrélation, mais réduit la résolution géométrique du processus. De préférence, la taille des vignettes de corrélation est de 13*13 points et la taille de l'aire de recherche est fonction de l'erreur maximum estimée de l'orientation relative des deux images.

Portant, la taille et la forme des vignettes de corrélation ainsi que la nature des coefficients de ressemblance utilisés pour identifier les points homologues peuvent faire l'objet de nombreuses variantes de réalisation.

Ayant identifié les couples de points homologues des deux images du couple A, les décalages de position en ligne et en colonne pour chaque couple de points homologues sont déduits de leurs coordonnées pixellaires à l'étape 4.

On sélectionne, ensuite, les meilleurs points homologues à l'étape 5 suivant la valeur du critère de corrélation, la forme du pic de corrélation et la répartition des points homologues sur l'image secondaire. Les deux premiers aspects sont bien connus de l'homme de l'art et ne seront pas détaillés plus en détail. En ce qui concerne la répartition des points, on s'assure par exemple qu'il y a au moins 1.0 couples de points homologues pour chaque zone d'image, l'image étant découpée typiquement en 4*4 zone adjacentes de même dimension.

Les techniques de recherche, de points homologues et de calcul de décalages de position entre couples de points appariés peuvent faire l'objet de nombreuses variantes de réalisation et ne doivent pas être limitées à l'illustration faite sur la figure (4) du procédé de géoréférencement.

On peut procéder maintenant à l'affinage géométrique interne du modèle de prise de vue (étape 6) des images et on cherche plus particulièrement à affiner les paramètres de prise de vue d'attitude entre les deux images du couple A. On considère que les valeurs de ces paramètres à affiner sont proches des valeurs connues initialement et on linéarise autour de ces conditions initiales.

En s'appuyant sur les couples de points homologues sélectionnés, on réalise l'affinage par minimisation selon la méthode des moindres carrés, technique bien connue de l'homme de l'art, des écarts entre les points mesurés et les points estimés par l'opération d'affinage.

La procédure d'affinage peut, dans le cadre d'un système imageur quelconque utilisant le procédé, faire l'objet de plusieurs variantes de réalisation et n'est pas limitée à l'illustration faite en référence à la figure (4).

4- Génération du MNT- intermédiaire

Tel qu'illustré sur la figure (4), on cherche maintenant à générer un modèle numérique de terrain intermédiaire, en condition de faible base stéréoscopique. La génération de ce modèle d'altitude est effectuée principalement grâce aux étapes suivantes sur une grille de corrélation dense de points de l'image de référence :

- modélisation du décalage de position, de l'attitude estimée B' et de la base stéréoscopique b/h pour tous les points de la grille (étape 7) en s'appuyant sur le modèle de prise de vue nouvellement affiné et le MNT de référence B. Pour déterminer la grille d'altitude B', on projette le MNT de référence B dans la géométrie de l'image de référence et on obtient un modèle numérique de référence B';
- mise en correspondance des deux images du couple A à l'étape 8 et plus précisément calcul fin de décalages de position entre les deux images.
- reconstruction intermédiaire du relief de la scène observée par un calcul d'altitude (étape 10) pour chaque point de la grille de corrélation.

# EP 1 828 992 B1

De préférence, le pas de la grille est définit entre N/3 et N/2, N était la taille de la vignette centrée sur un pixel de l'image de référence selon une direction. En effet, la mesure de décalage est moyennée sur la vignette. Pour correctement échantillonner ce signal, il suffit de prendre un pas de grille inférieur à N/2. Cela a de plus l'avantage de limiter le nombre de points à calculer.

La modélisation a pour effet d'accélérer le calcul fin des décalages de l'étape 8 puisque l'aire de recherche de la vignette de corrélation centrée sur un point homologue dans l'image secondaire est d'autant plus petite que l'estimation de sa position est meilleure.

L'étape 8 de calcul fin des décalages de position entre l'image de référence et l'image secondaire comprend les sous étapes suivantes :

- recherche des positions des homologues des points de la grille de l'image de référence dans l'image secondaire par corrélation linéaire automatique. Le principe de corrélation est similaire à celui de l'étape 4 mais l'aire de recherche peut être réduite, puisque la géométrie relative entre les deux prises de vue est maintenant bien connue. Pour initialiser les calculs, on positionne la vignette de corrélation comme centrée sur le point de l'image secondaire qui a été estimé comme homologue du point de l'image de référence traité, lors de l'étape 7 de modélisation. On recherche et identifie ensuite le véritable point homologue en déterminant la position dans l'aire de recherche, du centre de la vignette de corrélation qui maximise le coefficient de corrélation.

- pour une recherche avec une précision sous pixellaire de la position de la vignette secondaire qui donne la valeur maximum du coefficient de corrélation, on interpole l'image secondaire autour de valeurs choisies de la même façon qu'à l'étape 4. Avantageusement, on appliquera un filtre sinus cardinal, de taille 15*15 points, apodisé par une gaussienne normalisée, sur la vignette de corrélation de l'image secondaire. D'autres filtres sont utilisables, tels les filtres basés sur les fonctions spline. L'image secondaire est rééchantillonnée autour de la position de l'homologue identifié lors de la sous étape précédente, à + ou - 0.5 pixels en ligne et en colonne. De manière itérative avec des décalages chaque fois plus petits ($1/2^n$) autour de la meilleure position, le coefficient de corrélation est recalculé pour chacune des positions et le maximum de corrélation est repéré. D'autres stratégies sont possibles, comme celles basées sur les gradients locaux de taux de corrélation.

Typiquement, les taux de corrélation sont supérieurs à 0.97 et la précision de localisation des points homologues atteinte est de 0.01 à 0.03 pixel pour des images à 10m de résolution, avec un rapport signal à bruit de 200 pour une luminance moyenne de 120W/m$^2$/stéradian, et après avoir mis les images dans les conditions du critère de Shannon.

A tout pixel de l'image de référence, on peut ainsi faire correspondre une valeur de décalage de position, à condition que le pixel homologue soit prouvé. On obtient, à la sortie de cette étape, une grille dense et précise de décalages de position entre les pixels de l'image de référence et leurs homologues dans l'image secondaire.

La reconstruction intermédiaire du relief de la scène réalisée grâce à l'étape 10 du calculs d'altitude en chaque point de la grille de corrélation dense de l'image de référence est initialisée, à l'étape 9, par le calcul, dans la direction épipolaire qui est la direction de la parallaxe stéréoscopique, de la différence $\Delta x$ entre les décalages de position déterminés lors de l'étape 8 et le modèle de décalage établi à l'étape 7 de modélisation.

Cette différence $\Delta x$ est, en première approximation, proportionnelle à la différence entre l'altitude vraie de chaque point de la grille et l'altitude estimée à l'étape 7. On définit, en effet, la valeur d'altitude de chacun des points par la formule suivante :

$$\text{Altitude} = \text{altitude modélisée dans le MNT B'} + [\Delta x / (b/h \text{ local})]$$

A l'aide de B', qui représente le MNT de référence B remis dans la géométrie de l'image de référence sur la grille de corrélation dense, et du modèle des valeurs locales de base stéréoscopiques b/h (étape 7), on restitue ainsi le relief de chaque point de la grille de l'image de référence. On génère donc un modèle numérique de terrain intermédiaire en faible base stéréoscopique dans la géométrie de l'image de référence. La précision sub pixellaire atteinte lors de la corrélation permet d'obtenir de très bonnes précisions altimétriques malgré le faible effet stéréoscopique.

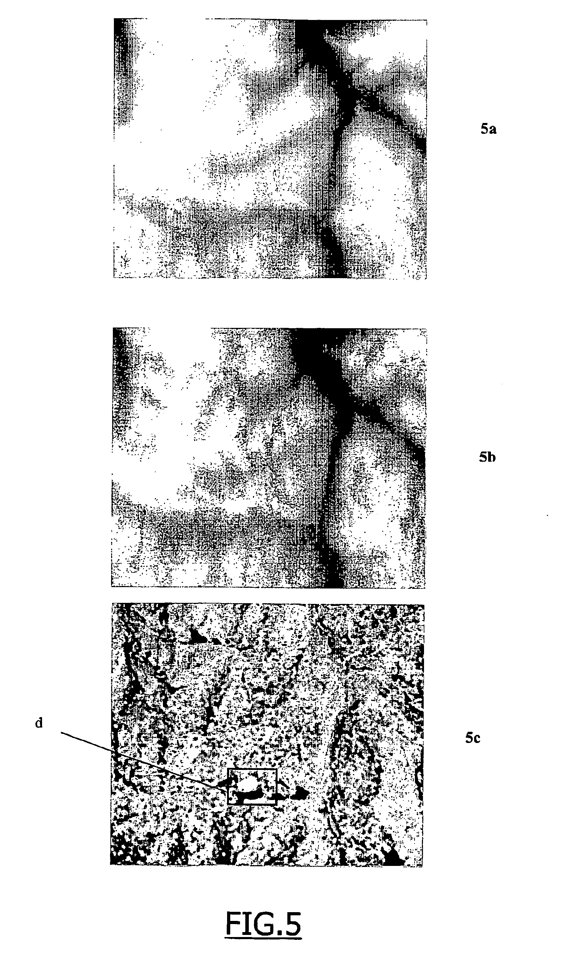

Les figures 5a, 5b, 5c illustrent respectivement un exemple de MNT intermédiaire à faible base stéréoscopique généré par le procédé, le MNT de référence B', et la différence entre les deux précédents modèles, tous trois dans le plan focal de l'instrument.

Les zones à fortes différences sont les zones ou le modèle numérique de terrain de référence n'avait pas de valeur c'est-à-dire relevant de parties masquées dues par exemple à un relief trop important. La présence de taches comme dans la fenêtre d est le signe d'une zone où le MNT de référence était inconnu, et a donc été interpolé. La présence de formes basse fréquence visiblement corrélées au relief est un signe que les deux MNT, à savoir le MNT intermédiaire et le MNT de référence ne sont pas encore parfaitement superposables.

Les étapes de traitement qui suivent vont pouvoir remédier à cet état de fait.

5. Affinage géométrique externe du modèle de prise de vue

Tel qu'illustré sur la figure (6) et tel que présenté précédemment: en référence à la figure (2), on cherche, maintenant, à effectuer un second affinage géométrique du modèle de prise de vue (étape 13), et plus précisément une opération d'orientation externe des images du couple A en éliminant typiquement les biais en roulis, tangage et lacet.

L'affinage du modèle géométrique de prise de vue est effectué grâce aux étapes suivantes :

- calcul fin des décalages de position entre les deux MNT, à savoir le MNT intermédiaire et le MNT de référence B' (étape 11) ;
- sélection des meilleurs points homologues entre les deux MNT (étape 12) ;
- affinage géométrique externe proprement dit du modèle de prise de vue de l'image de référence (étape 13).

L'étape du calcul fin des décalages de position à l'étape 11 entre les deux modèles numérique de terrain est issue, comme celle des images, d'une recherche de la position de points homologues qui maximise la corrélation locale entre les deux MNT.

Ce calcul fin des décalages de position est réalisé en s'appuyant sur le MNT intermédiaire et le MNT de référence B' mis dans la géométrie de l'image de référence, et il comprend les sous étapes suivantes :

Pour chacun des points d'une grille de corrélation définie comme un sous ensemble du MNT de référence B' de pas de grille typiquement 5:

- recherche des positions des points homologues aux points du MNT de référence B' dans le MNT intermédiaire par corrélation linéaire. Le principe est identique à celui de l'étape 4 de recherche de points homologues et les caractéristiques des vignettes sont similaires à celles de l'étape 4. L'aire de recherche peut être petite, elle dépend de la précision de localisation du système imageur. Par exemple, pour une précision de localisation de 100m, un MNT intermédiaire généré tous les 50 mètres et un MNT de référence supposé parfaitement localisé, il suffira d'une zone de recherche de 2 pixels MNT. Pour initialiser les calculs, on positionne la vignette de corrélation sur l'image secondaire au même endroit que dans le MNT de référence B'. On recherche et identifie le point homologue en déterminant la position dans l'aire de recherche, du centre de la vignette de corrélation qui maximise le coefficient de corrélation.

- le calcul sous pixellaire se fait de la même façon que lors de l'étape 4.

En sortie de l'étape 11, on obtient pour chaque point de la grille sur le MNT de référence B', le décalage en ligne et en colonne entre les points homologues des deux MNT.

On sélectionne ensuite les meilleurs couples de points homologues à l'étape 12 suivant deux critères : choisir les couples de points homologues plutôt sur un relief important et présentant un fort taux de corrélation.

Les points du MNT de référence qui sont sélectionnés dans les couples sont considérés comme des points d'appui puisque par définition, on connaît précisément leur position sur le terrain.

Les techniques de recherche de points homologues et de calcul de décalages de position entre deux modèles numériques de terrain peuvent faire l'objet de nombreuses variantes de réalisation et ne doivent pas être limitées à la description faite du procédé en référence à la figure (6).

L'étape 13 consécutive d'affinage géométrique externe du modèle de prise de vue de l'image de référence est réalisée par la méthode de minimisation par moindres carrés, et s'effectue typiquement en vue de corriger les biais en roulis, lacet et tangage, en supposant que le plan focal de l'image de référence est parfaitement connu.

En sortie de cette étape, on obtient un modèle de prise de vue final affiné pour l'image de référence ainsi que pour l'image secondaire à condition, pour cette dernière, de copier les valeurs des biais du modèle de prise de vue de l'image de référence dans le modèle de prise de vue de l'image secondaire.

A ce niveau de traitement du procédé, on dispose donc de paramètres géométriques affinés pour les deux images du couple A.

De préférence, il est conseillé de terminer par un affinage global de tous les paramètres (non illustré sur la figure (6)) comprenant l'affinage du biais en tangage, roulis et lacet pour le modèle de l'image primaire, l'affinage partagé de la dérive en roulis, tangage, lacet pour les deux images et l'affinage des angles de prise de vue interne entre les deux barrettes car les deux affinages réalisés par le procédé ne sont pas strictement indépendants.

## 6. Génération_d'un_MNT_final

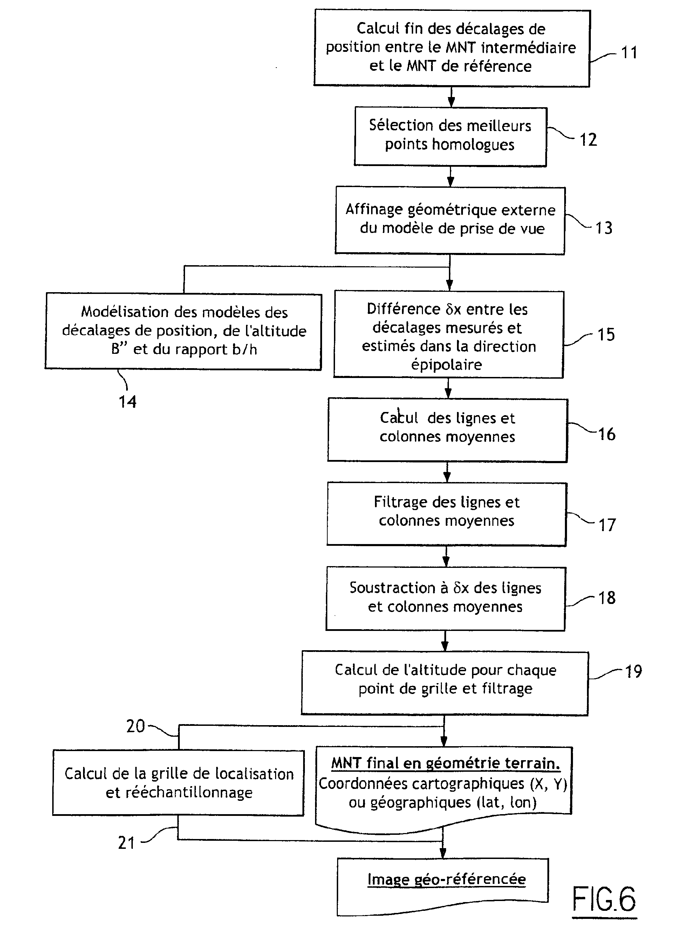

Tel qu'illustré sur la figure 6, on cherche maintenant à générer un modèle numérique de terrain final dans le plan focal. La génération de ce modèle d'altitude est effectuée principalement grâce aux étapes suivantes :

modélisation des décalages de position, de l'altitude 13" et des valeurs de la base stéréoscopique b/h sur les points de la grille dense (étape 14) en s'appuyant sur le modèle de prise de vue final affiné et le MNT de référence. Pour déterminer la grille d'altitude B", le MNT de référence B est projecté dans la géométrie de l'image de référence et on obtient un modèle numérique de référence B";

- différence entre les décalages de position mesurés à l'étape 8 et modélisés à l'étape 14 des deux images du couple A (étape 15) ;
- filtrage des lignes et des colonnes moyennes de la grille dense de points (étape 17) ;
- reconstruction finale du relief de la scène observée par le calcul des altitudes de chaque point de la grille (étape 19) et filtrage facultatif.

Grâce au modèle final des décalages de position et connaissant la grille dense des décalages mesurés à l'étape 8 entre l'image de référence et l'image secondaire, on calcule à l'étape 15 la différence $\Delta X$ entre les décalages mesurés et estimés dans la direction épipolaire pour les couples de points homologues des deux images.

Ces différences proviennent de trois sources :

- Les décalages dus à des résidus non modélisés d'attitude du capteur ou à une connaissance imparfaite du plan focal ;
- Les décalages dus à l'inexactitude des altitudes du MNT de référence. Les différences sont en fait directement interprétables en terme d'erreur d'altitude sur le MNT de référence;
- Le bruit de mesure.

Pour corriger les erreurs altimétriques potentiellement importantes dues à des résidus non modélisés de la géométrie de prise de vue, c'est-à-dire éliminer les effets résiduels aussi bien en colonne (résidus d'attitude) qu'en ligne (résidus du plan focal), qui dégradent la performance étant donnée la faible base stéréoscopique, on réalise :

- le calcul de la ligne et de la colonne moyenne des décalages de position sur la grille (étape 16), en prenant soin de n'effectuer le calcul que sur les points valides, c'est-à-dire ceux où la corrélation était valide et où le MNT de référence était valide ;
- le calcul des lignes et des colonnes moyennes grâce à un filtre passe bas (étape 17) qui sélectionne les fréquences spatiales inférieures à la fréquence spatiale maximale accessible par le MNT de référence. Le filtre peut indifféremment être bâti dans le domaine spatial ou fréquentiel, et on veillera à régulariser sa réponse fréquentielle pour éviter les phénomènes de rebond. Le filtrage est une technique maîtrisée par l'homme de l'art. Par cette étape, on obtient comme ligne moyenne le résidu basse fréquence de l'erreur de modélisation du plan focal, et comme colonne moyenne le résidu basse fréquence de l'erreur de modélisation de l'attitude du porteur.
- la soustraction à la différence $\Delta X$, des lignes et des colonnes moyennes (étape 18) et le calcul, par la formule définie en référence à la figure (4) et à l'étape 10 de génération du MNT intermédiaire, de l'altitude de chaque point de la grille de corrélation dense (étape 19) en s'appuyant sur les grilles finales modèles d'altitude B" et base stéréoscopique.

Il est finalement également possible de filtrer individuellement les points de la grille de corrélation sur les zones ou le MNT de référence B était considéré comme valide (pas les zones cachées) en fonction du gradient local de ce MNT. Plus le gradient est important, ce qui correspond à un fort relief, plus on autorise une différence importante entre le MNT de référence B" et le MNT final calculé. Avantageusement, on ne gardera que les points dont la valeur absolue de l'écart au modèle ne dépasse pas 3 fois la valeur absolue du gradient local.

On obtient ainsi, en sortie de l'étape 19, un modèle numérique de terrain final dans la géométrie de l'image de référence, consolidé, présentant une qualité de localisation égale à celle du MNT de référence, une absence de distorsion et une grande précision surtout sur le fort relief.

## 7. Géoréférencement des images satellites

Le modèle numérique de terrain final, calculé dans le plan focal, est projeté en coordonnées terrain à l'étape 20, dans un système géographique ou un système cartographique, par la technique connue de l'homme de l'art consistant en un calcul de la grille de localisation inverse utilisant le modèle de prise de vue final affiné de l'image de référence et le MNT de référence, suivi d'un rééchantillonnage. Le produit est un MNT final C, localisé exactement comme le MNT de référence B.

En s'appuyant maintenant sur le modèle de prise de vue final affiné de l'image que l'on cherche à géoréférencer et le MNT final C qui vient d'être produit, on échantillonnant automatiquement dans tout système cartographique ou dans le système géographique l'une ou l'autre des images du couple A de la même façon qu'à l'étape 20. En effet, les paramètres de prise de vue affinés de l'image étant disponibles, l'ensemble des points de l'image peuvent être projetés de façon précise dans la géométrie cartographique ou géographique avec la connaissance du MNT C.

8. Données de sortie

Le procédé permet d'obtenir les données suivantes, si nous nous plaçons dans le cas fréquent en imagerie satellitaire d'un couple A constitué d'une image haute résolution panchromatique et d'une image basse résolution multispectrale. Il s'agit de l'image de référence panchromatique géoréférencée, l'image secondaire multispectrale géoréférencée et l'image fusionnée (multispectrale de haute résolution) géoréférencée car cette dernière est parfaitement superposable par construction à l'image de référence panchromatique. Ces exemples de produits générés par le procédé sont des exemples non limitatifs des possibilités du procédé. Une variante possible des produits générés par le procédé seraient deux images hyperspectrales géoréférencées à condition évidemment que les données d'entrée soit un couple d'images hyperspectrales. Une autre variante peut être constituée par deux images de même bande spectrale et de même résolution, permettant la réalisation d'un MNT plus fin.

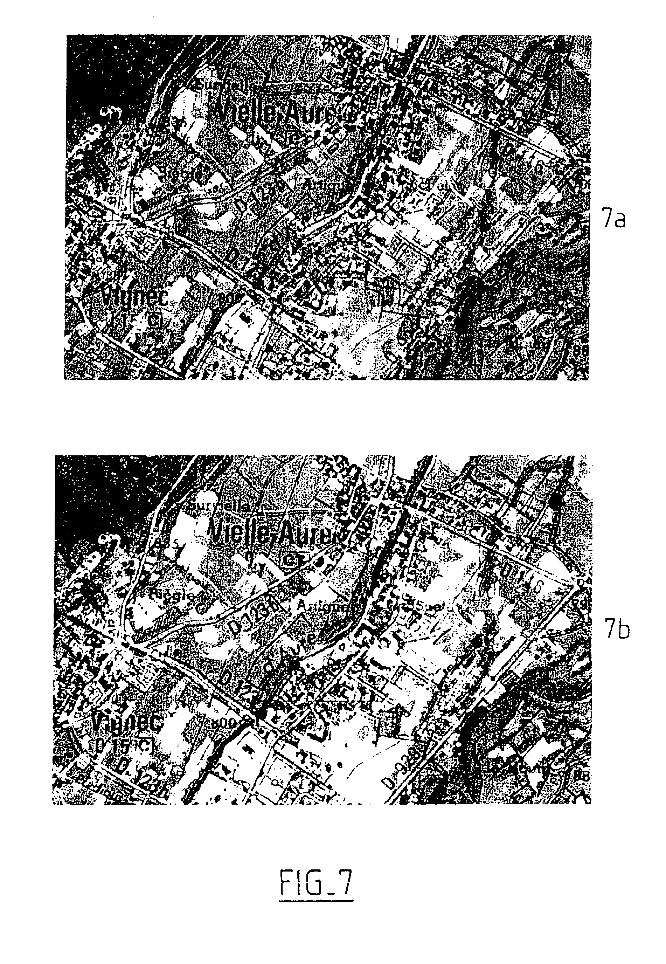

Sur les figures 7, des images artificielles fabriquées à partir d'une image SPOT 5 à 2,5 m de résolution et d'une carte Scan25 de l'IGN superposée sont représentées. Sur la figure 7a d'une part, l'image SPOT 5 a été géoréférencée avec le modèle de prise de vue et la localisation d'origine de SPOT 5, précise à environ 30 m et sur la figure 7b d'autre part, l'image SPOT 5 a été géoréférencée par le procédé de géoréférencement automatique selon l'invention.

Un procédé de transparence image/carte, 80% d'image et 20% de carte permet d'apprécier la superposition de l'image géocodée sur la carte de l'IGN,

On peut noter que la qualité de superposition dépend de la localisation du MNT de référence et de la qualité du MNT final généré par le procédé. Dans le cas de la figure 7, le MNT de référence, qui est un MNT SRTM, est visiblement très bien localisé.

9. Système d'acquisition du couple d'images

Le procédé exposé ci dessus a la possibilité d'être mis en oeuvre dans un ensemble comprenant un système de traitement et un système d'acquisition d'images de télédétection.

Le système d'acquisition permet l'acquisition des données d'entrée du procédé que sont les deux images du couple d'images A, à savoir l'image de référence et l'image secondaire.

Dans le mode de réalisation préféré de l'invention, ce système d'acquisition sera illustré par un satellite mais tout système imageur peut être illustré par le système d'acquisition des données d'entrée du procédé.

Ce système d'acquisition comprend un unique instrument d'acquisition permettant de collecter quasi simultanément, lors d'un seul passage, en quasi temps réel, des couples d'images en faible base stéréoscopique en observant la scène sous deux angles sensiblement proches. Ces couples d'images vont permettre l'élaboration de modèles numériques de terrain en faible base stéréoscopique sur des grandes surfaces.

L'instrument d'acquisition est composé d'un unique système optique et de plusieurs capteurs disposés dans le même plan focal.

Les images du couple A sont formées dans le plan focal de l'objectif sur les capteurs.

Chaque capteur est de type barrette CCD ou matrice TDI. Il est défini par sa géométrie interne. Chacun des capteurs est éventuellement composé de plusieurs détecteurs CCD ou de matrices TDI qui sont juxtaposés. Chaque détecteur capte la lumière provenant d'un pixel de terrain.

La disposition des capteurs au sein du même plan focal entraîne de faibles valeurs du rapport b/h, typiquement de 0.01 ou 0.02. En effet, pour un instrument de distance focale f, l'écartement entre les capteurs vaut f*(b/h). Pour une distance focale d'environ 1. mètre et un écartement entre les deux capteurs est de l'ordre du centimètre, on obtient bien des valeurs de b/h de l'ordre du centième. L'écart entre les directions de visée est dans ce cas de l'ordre du degré.

Le principe de l'acquisition du couple d'images satellites A grâce au système d'acquisition est le suivant : chaque ligne est formée par la réponse des capteurs au paysage, et les colonnes sont formées par l'avancement du satellite.

Pour chacun des capteurs, à chaque instant t, seuls les points de terrain situés dans le plan défini par le centre optique du système optique et la droite contenant la barrette CCD ou la matrice TDI sont vus par le système. Ce plan se définit comme un plan de vision.

Le rayonnement reçu pendant un certain temps dt et provenant des points de terrain contenus dans le plan de vision est enregistré. Le satellite étant en mouvement, à l'instant t' suivant, une autre partie de l'espace est observée, et ainsi de suite. Ainsi, à intervalles de temps réguliers, le système enregistre une ligne de pixels. L'ensemble des enregistrements constitue une des images du couple A, image qui pourra ensuite être georéférencée par le procédé décrit plus haut.

**Revendications**

1. Procédé de traitement d'images dans lequel on met en oeuvre le géoréférencement d'au moins une image numérique à l'aide au moins d'un modèle de prise de vue de ladite image numérique et d'une forme numérique, de relief de référence (B), ladite image numérique étant issue d'un couple d'images numériques acquises dans le même plan focal (A) comprenant au moins les étapes suivantes :

   • produire une forme numérique de relief dite forme numérique de relief intermédiaire à partir dudit couple d'images numériques (10') ;
   • traiter ladite forme numérique de relief intermédiaire et la dite forme numérique de référence en calculant les décalages de position entre les points de ladite forme numérique de relief de référence et leurs homologues dans la forme numérique de relief intermédiaire en vue d'affiner ledit modèle de prise de vue de ladite image numérique à géoréférencer (11,13) ;
   • Générer une forme numérique de relief dite forme numérique de relief finale à partir dudit couple d'images numériques et dudit modèle de prise de vue affiné (19') ;
   • Projeter ladite forme numérique de relief finale et ladite image numérique sur le terrain, dans un système géographique ou cartographique, en vue de leur géoréférencement (20').

2. Procédé selon la revendication 1 **caractérisé en ce que** les images numériques dudit couple sont acquises en faible base stéréoscopique.

3. Procédé selon l'une des revendications 1 à 2 **caractérisé en ce que** les dites formes numériques de relief sont des modèles numériques de terrain.

4. Procédé selon l'une des revendications 1 à 3 **caractérisé en ce que** l'étape consistant à traiter ladite forme numérique de relief intermédiaire et ladite forme numérique de relief de référence est réalisée en calculant par corrélation les décalages de position entre les points de ladite forme numérique de relief de référence et leurs homologues dans la forme numérique de relief intermédiaire.

5. Procédé selon l'une des revendications 1 à 4 **caractérisé en ce que** l'étape de production de la forme numérique de relief intermédiaire comprend au moins la sous étape consistant à calculer, par corrélation, les décalages de position entre les deux images numériques dudit couple.

6. Procédé selon l'une des revendications 1 à 5 **caractérisé en ce que** en outre, ladite étape de production de la forme numérique de relief intermédiaire, comprend les sous étapes suivantes :

   o modéliser un premier modèle des décalages de position estimés entre les deux images numériques dudit couple ;
   o calculer la différence entre lesdits décalages de position entre les deux images numériques dudit couple et ledit premier modèle des décalages de position ;
   o calculer l'altitude des points des images numériques dudit couple.

7. Procédé selon l'une des revendications 1 à 6 **caractérisé en ce que** il comprend en outre une étape de prétraitement consistant au moins à réaliser un traitement anti-repliement dudit couple d'images numériques afin qu'elles vérifient toutes les deux le critère de Shannon.

8. Procédé selon la revendication 7 **caractérisé en ce que** ledit traitement anti-repliement dudit couple d'images numériques afin qu'elles vérifient toutes les deux le critère de Shannon est un traitement hypomode.

9. Procédé selon l'une des revendications 1 à 8 **caractérisé en ce que** en outre, ladite étape de génération d'une forme numérique de relief finale, comprend au moins les sous étapes suivantes :

o modéliser un second modèle des décalages de position estimés entre les deux images numériques dudit couple ;

o calculer la différence entre lesdits décalages de position entre les deux images numériques dudit couple et ledit second modèle des décalages de position;

o filtrer des lignes et des colonnes moyennes des images numériques dudit couple ;

o calculer l'altitude des points des images numériques dudit couple.

10. Procédé selon l'une des revendications 1 à 9 **caractérisé en ce que** ledit couple d'images numériques est formé de deux images de bandes spectrales et / ou de résolution différentes.

11. Système de traitement d'images dans lequel on met en oeuvre le géoréférencement d'au moins une image numérique à l'aide au moins d'un modèle de prise de vue de ladite image numérique et d'une forme numérique de relief de référence (B), ladite image numérique étant issue d'un couple d'images numériques acquises dans le même plan focal (A), comprenant au moins :

• des moyens de production pour produire une forme numérique de relief dite forme numérique de relief intermédiaire à partir dudit couple d'images numériques (10');

• des moyens de traitement pour traiter ladite forme numérique de relief intermédiaire et ladite forme numérique du relief de référence en calculant les décalages de position entre les points de ladite forme numérique de relief de référence et leurs homologues dans ladite forme numérique de relief intermédiaire en vue d'affiner ledit modèle de prise de vue de l'image numérique à géoréférencer (11,13);

• des moyens de génération pour générer une forme numérique de relief dite forme numérique de relief finale à partir dudit couple d'images numériques et dudit modèle de prise de vue affiné (19');

• des moyens de projection pour projeter ladite forme numérique de relief finale et ladite image numérique sur le terrain, dans un système géographique ou cartographique, en vue de leur géoréférencement (20').

12. Système selon la revendication 11 précédente **caractérisé en ce que** les images dudit couple sont acquises en faible base stéréoscopique.

13. Système selon l'une des revendications 11 à 12 **caractérisé en ce que** les dites formes numériques de relief sont des modèles numériques de terrain.

14. Système selon l'une des revendications 11 à 13 **caractérisé en ce que** lesdits moyens de traitement sont aptes à traiter ladite forme numérique de relief intermédiaire et ladite forme numérique de relief de référence en calculant par corrélation les décalages de position entre les points de ladite forme numérique de relief de référence et leurs homologues dans la forme numérique de relief intermédiaire.

15. Système selon l'une des revendications 11 à 14 **caractérisé en ce que** les moyens de production de la forme numérique de relief intermédiaire sont aptes, au moins, à calculer par corrélation les décalages de position entre les deux images numériques dudit couple.

16. Système selon l'une des revendications 11 à 15 **caractérisé en ce que** en outre, lesdits moyens de production de la forme numérique de relief intermédiaire sont associés, au moins, à :

• des moyens de modélisation pour modéliser un premier modèle des décalages de position entre les deux images numériques dudit couple ;

• des moyens de calcul primaires pour calculer la différence entre lesdits décalages de position entre les deux images numériques dudit couple et ledit premier modèle des décalages de position ;

• des moyens de calcul secondaires pour déterminer l'altitude des points des images numériques dudit couple.

17. Système selon l'une des revendications 11 à 16 **caractérisé en ce que** il comprend, en outre, des moyens de prétraitement aptes, au moins, à réaliser un traitement anti-repliement dudit couple d'images numériques afin qu'elles vérifient toutes les deux le critère de Shannon.

18. Système selon la revendication 17 **caractérisé en ce que** ledit traitement anti-repliement dudit couple d'images numériques afin qu'elles vérifient toutes les deux le critère de Shannon est un traitement hypomode.

19. Système selon l'une des revendications 11 à 18 **caractérisé en ce que** en outre, lesdits moyens de génération de la forme numérique de relief finale sont associés, au moins, à :

- des moyens de modélisation pour modéliser un second modèle des décalages de position entre les deux images numériques dudit couple;
- des moyens de calcul primaires pour calculer la différence entre lesdits décalages de position entre les deux images numériques dudit couple et ledit second modèle des décalages de position ;
- des moyens de filtrage pour filtrer les lignes et des colonnes moyennes des images numériques dudit couple ;
- des moyens de calcul secondaires pour déterminer l'altitude des points des images numériques dudit couple.

20. Système selon l'une des revendications 11 à 19 **caractérisé en ce que** ledit couple d'images numériques est constitué de deux images de bandes spectrales et / ou de résolution différente.

21. Utilisation d'un système d'acquisition d'un couple d'images dans le même plan focal pour la mise en oeuvre du procédé selon les revendications 1 à 10, comprenant au moins deux capteurs optiques, le premier capteur permettant l'acquisition de la première image dudit couple et le second capteur permettant l'acquisition de la seconde image dudit couple, les deux capteurs étant positionnés dans une configuration de faible base stéréoscopique.

22. Utilisation d'un système d'acquisition d'un couple d'images dans le même plan focal pour la mise en oeuvre du procédé selon les revendications J. à 10, comprenant comme capteurs optiques des barrettes CCD ou des matrices TDI.

23. Utilisation d'un système d'acquisition d'un couple d'images dans le même plan focal en vue d'un géoréférencement d'au moins une image dudit couple d'images mis en oeuvre par un procédé de traitement d'images défini selon l'une des revendications 1 à 10, comprenant au moins deux capteurs optiques, le premier capteur permettant l'acquisition de la première image dudit couple et le second capteur permettant l'acquisition de la seconde image dudit couple, les deux capteurs étant positionnés dans une configuration de faible base stéréoscopique.

## Claims

1. An image processing method in which the georeferencing of at least one digital image is implemented using at least one image acquisition model of the said digital image and one reference digital altitude model (B), the said digital image being generated from a pair of digital images acquired in the same focal plane (A), including at least the following steps:

    - producing a digital altitude model called an intermediate digital altitude model from the said pair of digital images (10');
    - processing the said intermediate digital altitude model and the said reference digital altitude model by calculating the position offsets between the points on the said reference digital altitude model and their counterparts in the intermediate digital altitude model for the purpose of refining the said image acquisition model of the said digital image to be georeferenced (11, 13);
    - generating a digital altitude model called the final digital altitude model from the said pair of digital images and the said refined image acquisition model (19');
    - projecting the said final digital altitude model and the said digital image onto the terrain, in a geographic or cartographic system, for the purpose of georeferencing them (20').

2. Method according to Claim 1 wherein the digital images in the said pair are acquired with a small stereoscopic base.

3. A method according to Claim 1 or 2 wherein the said digital altitude models are digital terrain models.

4. A method according to one of Claims 1 through 3 wherein the step consisting of processing the said intermediate digital altitude model and the said reference digital altitude model is carried out by calculating by correlation the position offsets between the points of the said reference digital altitude model and their counterparts in the intermediate digital altitude model.

5. A method according to one of Claims 1 through 4 wherein additionally, the said step of producing the intermediate digital altitude model includes at least the sub-step consisting of calculating, by correlation, the position offsets between the two digital images of the said pair.

6. A method according to one of Claims 1 through 5 wherein additionally, the said step of producing the intermediate digital altitude model includes the following sub-steps:

- modeling a first model of estimated position offsets between the two digital images of the said pair;
- calculating the difference between the said position offsets between the two digital images of the said pair and the said first position offset model;
- calculating the altitude of the points in the digital images of the said pair.

7. A method according to one of Claims 1 through 6, wherein is additionally included a preprocessing step consisting at least of performing anti-aliasing processing of the said pair of digital images so that they both satisfy the Shannon criterion.

8. A method according to Claim 7 wherein the said anti-aliasing processing of the said pair of digital images so that they both satisfy the Shannon criterion is hypomode processing.

9. A method according to one of Claims 1 through 8 wherein additionally, the said step of generating a final digital altitude model includes at least the following sub-steps:

- modeling a second model of the position offsets between the two digital images of the said pair;
- calculating the difference between the said position offsets between the two digital images of the said pair and the said second position offset model;
- filtering the mean lines and columns of the digital images of the said pair;
- calculating the altitude of the points of the digital images of the said pair.

10. A method according to one of Claims 1 through 9 wherein the said pair of digital images is made up of two images of different spectral bands and/or resolutions.

11. An image processing system in which is implemented the georeferencing of at least one digital image using at least one image acquisition model of the said digital image and a reference digital altitude model (B), the said digital image being generated from a pair of digital images acquired in the same focal plane (A), including at least:

- production means for producing a digital altitude model called the intermediate digital altitude model from the said pair of digital images (10');
- processing means for processing the said intermediate digital altitude model and the said reference digital altitude model by calculating position offsets between the points of the said reference digital altitude model and their counterparts in the said intermediate digital altitude model for the purpose of refining the said image acquisition model to be georeferenced (11, 13);
- generating means for generating a digital altitude model called the final digital altitude model from the said pair of digital images and the said refined image acquisition model (19');
- projection means for projecting the said final digital altitude model and the said digital image onto the terrain, in a geographic or cartographic system, for the purpose of georeferencing them (20').

12. A system according to the foregoing Claim 11 wherein the images of the said pair are acquired with a small stereoscopic base.

13. A system according to Claim 11 or 12, wherein the said digital altitude models are digital terrain models.

14. A system according to one of Claims 11 through 13 wherein the said processing means are able to process the said intermediate digital altitude model and the said reference digital altitude model by calculating by correlation the position offsets between the points of the said reference digital altitude model and their counterparts in the reference digital altitude model.

15. A system according to one of Claims 11 through 14 wherein the means of production of the intermediate digital altitude model are able to at least calculate by correlation the position offsets between the two digital images of the said pair.

16. A system according to one of Claims 11 through 15 wherein in addition, the said means for producing the intermediate digital altitude model are associated, at least, with:

- modeling means for modeling a first model of the position offsets between the two digital images of the said pair;
- primary calculation means for calculating the difference between the said position offsets between the two digital images of the said pair and the said first position offset model;
- secondary calculation means for determining the altitude of the points of the digital images of the said pair.

17. A system according to one of Claims 11 through 16, wherein are additionally included preprocessing means capable, at least, of performing anti-aliasing processing of the said pair of digital images so that they both satisfy the Shannon criterion.

18. A system according to Claim 17 wherein the said anti-aliasing processing of the said digital image pair so that they both satisfy the Shannon criterion is an hypomode processing.

19. A system according to one of Claims 11 through 18 wherein additionally, the said means of generating the final digital altitude model are associated, at least, with:

- modeling means for modeling a second model of position offsets between the two digital images in the said pair;
- primary calculation means for calculating the difference between the said position offsets between the two digital images of the said pair and the said second position offset model;
- filtering means for filtering the mean lines and columns of the digital images in the said pair;
- secondary calculation means for determining the altitude of the points on the digital images of the said pair.

20. A system according to one of Claims 11 through 19 wherein the said pair of digital images is made up of two images with different spectral bands and/or resolutions.

21. The use of an acquisition system for a pair of images in the same focal plane for implementing the method according to Claims 1 through 10, including at least two optical sensors, the first sensor allowing acquisition of the first image of the said pair and the second sensor allowing the acquisition of the second image of the said pair, both sensors being positioned in a configuration with a small stereoscopic base.

22. The use of an acquisition system for a pair of images in the same focal plane for implementing the method according to Claims 1 through 10, including as optical sensors CCD bars or TDI arrays.

23. The use of an acquisition system for a pair of images in the same focal plane for the purpose of georeferencing at least one image of the said pair, implemented by an image processing method defined according to one of Claims 1 through 10, including at least two optical sensors, the first sensor allowing the acquisition of the first image of the said pair and the second sensor allowing the acquisition of the second image of the said pair, the two sensors being positioned in a configuration with a small stereoscopic base.

**Patentansprüche**

1. Verfahren zur Bildverarbeitung, bei dem die Georeferenzierung wenigstens eines digitalen Bildes mit Hilfe wenigstens eines Filmaufnahmemodells des digitalen Bildes und einer digitalen Referenzreliefform (B) durchgeführt wird, wobei das digitale Bild aus einem Paar von digitalen Bildern stammt, die in derselben Fokalebene (A) erfasst werden, welches wenigstens die folgenden Schritte umfasst:

• Herstellen einer digitalen Reliefform, genannt digitale Zwischenreliefform, aus dem Paar digitaler Bilder (10');
• Verarbeiten der digitalen Zwischenreliefform und der digitalen Referenzform, indem die Positionsverschiebungen zwischen den Punkten der digitalen Reliefform und ihren Entsprechungen in der digitalen Zwischenreliefform im Hinblick darauf berechnet werden, das Filmaufnahmemodell des zu georeferenzierenden digitalen Bildes (11, 13) zu verfeinern;
• Erzeugen einer digitalen Reliefform, genannt endgültige digitale Reliefform, aus dem Paar digitaler Bilder und dem verfeinerten Filmaufnahmemodell (19');
• Projizieren der endgültigen digitalen Reliefform und des digitalen Bildes auf das Terrain in einem geographischen oder kartographischen System im Hinblick auf ihrer Georeferenzierung (20').

2. Verfahren gemäß Anspruch 1, **dadurch gekennzeichnet, dass** die digitalen Bilder des Paares auf schwacher stereoskopischer Basis erfasst werden.

3. Verfahren gemäß einem der Ansprüche 1 bis 2, **dadurch gekennzeichnet, dass** die digitalen Reliefformen digitale Terrainmodelle sind.

4. Verfahren gemäß einem der Ansprüche 1 bis 3, **dadurch gekennzeichnet, dass** der Schritt, der darin besteht, die digitale Zwischenreliefform und die digitale Referenzreliefform zu verarbeiten, durch Korrelationsberechnen der Positionsverschiebungen zwischen den Punkten der digitalen Referenzreliefform und ihren Entsprechungen in der digitalen Zwischenreferenzform verwirklicht wird.

5. Verfahren gemäß einem der Ansprüche 1 bis 4, **dadurch gekennzeichnet, dass** der Schritt zur Herstellung der digitalen Zwischenreliefform wenigstens den Unterschritt umfasst, der darin besteht, durch Korrelation die Positionsverschiebungen zwischen den beiden digitalen Bildern des Paares zu berechnen.

6. Verfahren gemäß einem der Ansprüche 1 bis 5, **dadurch gekennzeichnet, dass** außerdem der Schritt zur Herstellung der digitalen Zwischenreliefform die folgenden Schritte umfasst:

   • Modellieren eines ersten Modells der geschätzten Positionsverschiebungen zwischen den beiden digitalen Bildern des Paares;
   • Berechnen des Unterschieds zwischen den Positionsverschiebungen der digitalen Bilder des Paares und dem ersten Modell der Positionsverschiebungen;
   • Berechnen der Höhe der Punkte der digitalen Bilder des Paares.

7. Verfahren gemäß einem der Ansprüche 1 bis 6, **dadurch gekennzeichnet, dass** es außerdem einen Vorverarbeitungsschritt umfasst, der darin besteht, wenigstens eine Anti-Alias-Verarbeitung des Paares digitaler Bilder zu verwirklichen, damit sie beide Shannon-Kriterien überprüfen.

8. Verfahren gemäß dem Anspruch 7, **dadurch gekennzeichnet, dass** die Anti-Alias-Verarbeitung des Paares digitaler Bilder, damit sie beide das Shannon-Kriterium überprüfen, eine Hypomode-Verarbeitung ist.

9. Verfahren gemäß einem der Ansprüche 1 bis 8, **dadurch gekennzeichnet, dass** außerdem der Schritt zur Erzeugung einer endgültigen digitalen Form außerdem die folgenden Schritte umfasst:

   • Modellieren eines zweiten Modells der geschätzten Positionsverschiebungen zwischen den beiden digitalen Bildern des Paares;
   • Berechnen des Unterschieds zwischen den Positionsverschiebungen zwischen den beiden digitalen Bildern des Paares und dem zweiten Modell der Positionsverschiebungen;
   • Filtern der mittleren Zeilen und Spalten der digitalen Bilder des Paares;
   • Berechnen der Höhe der Punkte der digitalen Bilder des Paares.

10. Verfahren gemäß einem der Ansprüche 1 bis 9, **dadurch gekennzeichnet, dass** das Paar digitaler Bilder aus zwei Bildern mit verschiedenen Spektralbändern und / oder verschiedenen Auflösungen gebildet ist.

11. System zur Bildverarbeitung, bei dem die Georeferenzierung wenigstens eines digitalen Bildes mit Hilfe wenigstens eines Filmaufnahmemodells des digitalen Bildes und einer digitalen Referenzreliefform (B) durchgeführt wird, wobei das digitale Bild aus einem Paar von digitalen Bildern stammt, die in derselben Fokalebene (A) erfasst werden, welches wenigstens umfasst:

   • Herstellungsmittel, um eine digitale Reliefform, genannt digitale Zwischenreliefform, aus dem Paar digitaler Bilder (10') herzustellen,
   • Verarbeitungsmittel, um die digitale Zwischenreliefform und die digitale Form des Referenzreliefs zu verarbeiten, indem die Positionsverschiebungen zwischen den Punkten der digitalen Referenzreliefform und ihren Entsprechungen in der digitalen Zwischenreliefform im Hinblick darauf berechnet werden, das Filmaufnahmemodell des zu georeferenzierenden digitalen Bildes (11, 13) zu verfeinern;
   • Erzeugungsmittel, um eine digitale Reliefform, genannt endgültige digitale Reliefform, aus dem Paar digitaler Bilder und aus dem verfeinerten Filmaufnahmemodell (19') zu erzeugen;
   • Projektionsmittel, um die endgültige digitale Reliefform und das digitale Bild im Hinblick auf ihre Georeferenzierung (20') auf das Terrain in einem geographischen oder kartographischen System zu projizieren.

12. System gemäß vorhergehendem Anspruch 11, **dadurch gekennzeichnet, dass** die Bilder des Paares auf schwacher stereoskopischer Basis erfasst werden.

13. System gemäß einem der Ansprüche 11 bis 12, **dadurch gekennzeichnet, dass** die digitalen Reliefformen digitale Terrainmodelle sind.

14. System gemäß einem der Ansprüche 11 bis 13, **dadurch gekennzeichnet, dass** die Verarbeitungsmittel ausgelegt sind, die digitale Zwischenreliefform und die digitale Referenzreliefform zu verarbeiten, indem durch Korrelation die Positionsverschiebungen zwischen den Punkten der digitalen Referenzreliefform und ihren Entsprechungen in der digitalen Zwischenreliefform berechnet werden.

15. System gemäß einem der Ansprüche 11 bis 14, **dadurch gekennzeichnet, dass** die Mittel zur Herstellung der digitalen Zwischenreliefform zumindest ausgelegt sind, um durch Korrelation die Positionsverschiebungen zwischen den beiden digitalen Bildern des Paares zu berechnen.

16. System gemäß einem der Ansprüche 11 bis 15, **dadurch gekennzeichnet, dass** außerdem die Mittel zur Herstellung der digitalen Zwischenreliefform wenigstens gehören zu:

   • Modellierungsmitteln, um ein erstes Modell der Positionsverschiebungen zwischen den beiden digitalen Bildern des Paares zu modellieren;
   • primären Berechnungsmitteln, um die Differenz zwischen den Positionsverschiebungen zwischen den beiden digitalen Bildern des Paares und dem ersten Modell der Positionsverschiebungen zu berechnen;
   • sekundären Berechnungsmitteln, um die Höhe der Punkte der digitalen Bilder des Paares zu bestimmen.

17. System gemäß einem der Ansprüche 11 bis 16, **dadurch gekennzeichnet, dass** es außerdem Vorverarbeitungsmittel umfasst, die wenigstens ausgelegt sind, eine Anti-Alias-Verarbeitung des Paares digitaler Bilder zu verwirklichen, damit sie beide das Shannon-Kriterium überprüfen.

18. System gemäß dem Anspruch 17, **dadurch gekennzeichnet, dass** die Anti-Alias-Verarbeitung des Paares von digitalen Bildern, damit sie beide das Shannon-Kriterium überprüfen, eine Hypomode-Verarbeitung ist.

19. System gemäß einem der Ansprüche 11 bis 18, **dadurch gekennzeichnet, dass** außerdem die Mittel zur Erzeugung der endgültigen digitalen Reliefform wenigstens gehören zu:

   • Modellierungsmitteln, um ein zweites Modell der Positionsverschiebungen zwischen den beiden digitalen Bildern des Paares zu modellieren;
   • primären Berechnungsmitteln, um die Differenz zwischen den Positionsverschiebungen zwischen den beiden digitalen Bildern des Paares und dem zweiten Modell der Positionsverschiebungen zu berechnen;
   • Filtermitteln, um die mittleren Zeilen und Spalten der digitalen Bilder des Paares zu filtern;
   • sekundären Berechnungsmitteln, um die Höhe der Punkte der digitalen Bilder des Paares zu bestimmen.

20. System gemäß einem der Ansprüche 11 bis 19, **dadurch gekennzeichnet, dass** das Paar digitaler Bilder aus zwei Bildern mit verschiedenen Spektralbändern und / oder verschiedenen Auflösungen gebildet ist.

21. Verwendung eines Systems zur Erfassung eines Paares von Bildern in derselben Fokalebene zur Umsetzung des Verfahrens gemäß den Ansprüchen 1 bis 10, umfassend wenigstens zwei optische Sensoren, wobei der erste optische Sensor die Erfassung des ersten Bildes des Paares erlaubt und der zweite Sensor die Erfassung des zweiten Bildes des Paares erlaubt, wobei die beiden Sensoren in einer Konfiguration mit schwacher stereoskopischer Basis positioniert werden.

22. Verwendung eines Systems zur Erfassung eines Paares von Bildern in derselben Fokalebene zur Umsetzung des Verfahrens gemäß den Ansprüchen 1 bis 10, umfassend als optische Sensoren CCD-Module oder TDI-Matrizen.

23. Verwendung eines Systems zur Erfassung eines Paares von Bildern in derselben Fokalebene im Hinblick auf eine Georeferenzierung von wenigstens einem Bild des Paares von Bildern, das von einem Verfahren zur Bildverarbeitung umgesetzt wird, das gemäß einem der Ansprüche 1 bis 10 festgelegt ist, umfassend wenigstens zwei optische Sensoren, wobei der erste Sensor die Erfassung des ersten Bildes des Paares und der zweite Sensor die Erfassung des zweiten Bildes des Paares erlaubt, wobei die beiden Sensoren in einer Konfiguration mit schwacher stereoskopischer Basis positioniert sind.

FIG_1

A — Couples d'images satellites        MNT de référence — B

Prétraitement des images — 1

Calcul des décalages de position entre les deux images — 4

Affinage géométrique relatif au modèle de prise de vue — 6

Modélisation des modèles des décalages de position, de l'altitude B' et du rapport b/h — 7

Calcul fin des décalages de position entre deux images — 8

Génération du MNT intermédiaire — 10'

Calcul fin des décalages de position entre le MNT intermédiaire et le MNT de référence — 11

Affinage géométrique externe du modèle de prise de vue — 13

Modélisation des modèles des décalages de position, de l'altitude B" et du rapport b/h — 14

Génération d'un MNT final — 19'

Projection sur le terrain du MNT final — 20'

Géoréférencement des images — 21'

FIG.2

FIG.3

Calcul des décalages de
position entre les deux images — 4

Sélection des meilleurs
points homologues — 5

Affinage géométrique
interne du modèle de
Prise de vue — 6

Modélisation des modèles des
décalages de position, de l'altitude
B' et du rapport b/h — 7

Calcul fin des décalages de
position entre les deux images — 8

Différence δx entre les
décalages de position mesurés
et estimés dans la direction
épipolaire — 9

Calcul de l'altitude pour
chaque point de grille — 10

MNT intermédiaire dans la
géométrie de l'image de
référence

FIG.4

FIG.5

Calcul fin des décalages de position entre le MNT intermédiaire et le MNT de référence — 11

Sélection des meilleurs points homologues — 12

Affinage géométrique externe du modèle de prise de vue — 13

Modélisation des modèles des décalages de position, de l'altitude B'' et du rapport b/h — 14

Différence δx entre les décalages mesurés et estimés dans la direction épipolaire — 15

Calcul des lignes et colonnes moyennes — 16

Filtrage des lignes et colonnes moyennes — 17

Soustraction à δx des lignes et colonnes moyennes — 18

Calcul de l'altitude pour chaque point de grille et filtrage — 19

20 — Calcul de la grille de localisation et rééchantillonnage — 21

MNT final en géométrie terrain. Coordonnées cartographiques (X, Y) ou géographiques (lat, lon)

Image géo-référencée

FIG.6

EP 1 828 992 B1

7a

7b

FIG_7

26

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **Ehlers M. ; welch R.** Stereocorrelation of Landsat TM images. *Photogrammetric Engineering and Remote Sensing,* 1987, vol. 53 (9), 1231-1237